(19) Europäisches Patentamt
European Patent Office
Office européen des brevets

(11) **EP 3 468 207 A1**

(12) **EUROPEAN PATENT APPLICATION**

(43) Date of publication:
**10.04.2019 Bulletin 2019/15**

(21) Application number: **17195253.4**

(22) Date of filing: **06.10.2017**

(51) Int Cl.:
*H04N 21/426* (2011.01)       *G06F 21/62* (2013.01)
*H04N 21/4408* (2011.01)      *H04N 19/88* (2014.01)
*H04N 21/4627* (2011.01)      *H04N 21/4405* (2011.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nagravision S.A.**
**1033 Cheseaux-sur-Lausanne (CH)**

(72) Inventors:
• **TRAN, Minh-Son**
  **1033 Cheseaux-sur-Lausanne (CH)**
• **BIEBER, Yann**
  **1033 Cheseaux-sur-Lausanne (CH)**

(74) Representative: **Ipside**
  **6, Impasse Michel Labrousse**
  **31100 Toulouse (FR)**

(54) **MASKING TECHNIQUE**

(57)     There is provided a system and method for decoding an encoded video. The method comprises receiving an encoded video comprising a plurality of access units (AUs), performing a masking function to form a masked encoded video, transmitting the encoded masked video to a decoder arranged to decode the encoded masked video, receiving the decoded masked video from the decoder, and performing an unmasking function to form an unmasked decoded video. The masking function can comprise selecting at least one access unit (AU) from the encoded video, selecting at least one pair of macroblocks of the selected access unit (AU), and exchanging a position of macroblocks of the selected pair of macroblocks to form a masked encoded video. The unmasking function can comprise, for a frame corresponding to the selected AU, exchanging a position of pixels corresponding to the macroblocks of the selected at least one pair of macroblocks to form an unmasked decoded video.

Fig. 7

**Description**

**FIELD**

The present disclosure relates to a system and method for securing the video decoding process of a third party decoder. The present system and method find particular application when an untrusted third party decoder is used by a secure and trusted application.

**BACKGROUND**

As open devices such as smartphones, tablets and game consoles proliferate, the hardware of these electronic devices is becoming increasingly optimised to deliver high performance and low energy consumption in a bid to make such devices more competitive and more attractive to consumers. As a result, applications such as media players increasingly utilise platform drivers to interface with optimised hardware video decoders on the device, rather than using software video decoders within the application.

This use of dedicated platform decoding hardware provides the benefit of increased performance, since software video decoders are typically only well designed for a limited number of devices and cannot effectively exploit future improvements in devices. However, sending media content from a secure application to a hardware decoder introduces a risk that the media content provided will be compromised during the decoding process, since the transfer of the media content between the software application and a third party hardware decoder provides an entry point into the usually highly protected processing chain of the application handling the media content. This comprises the security of the data, or media content, being decoded.

A common method of improving the security of the media content is to provide encrypted content from an application to a platform's Digital Rights Management (DRM) component and then rely on a hardware secure media path between the DRM and the hardware decoder. However, this approach requires a secure media path to be present in the device hardware. An alternative approach of improving the security of the media content without requiring a hardware path is described in US 2015/0163520 A1. This method manipulates the Picture Order Count (a syntax element of the standard H.264 which identifies the presentation order of each Access Unit of the compressed video) within a secure application before sending the compressed video to a hardware platform decoder.

The platform decoder can correctly perform the decoding process but the resulting decoded video - which carries the intentionally modified Picture Order Count - can only be rendered or visualised in a meaningful way by the internal renderer of the application.

**BRIEF DESCRIPTION OF THE DRAWINGS**

Figure 1 illustrates the circulation of data between software and hardware within a typical media player application and shows the integration of masking and unmasking functions within such an application;
Figure 2 illustrates an example reference list of Access Units for a video;
Figure 3 illustrates the example reference list of Figure 2 after insertion of dummy Access Units in accordance with a first embodiment;
Figure 4 is a flowchart illustrating a method of performing the first embodiment;
Figure 5 illustrates a process of Access Unit splitting in accordance with a second embodiment;
Figure 6 is a flowchart illustrating a method of performing the second embodiment;
Figure 7 illustrates a process of Block Exchanging in accordance with a third embodiment;
Figure 8 is a flowchart illustrating a method of performing the third embodiment;
Figure 9 illustrates a process of Decoder Splitting in accordance with a fourth embodiment;
Figure 10 is a flowchart illustrating a method of performing the fourth embodiment; and
Figure 11 illustrates a block diagram of one implementation of a computing device.

**DETAILED DESCRIPTION OF THE DRAWINGS**

In overview, a system for and method of decoding a video is disclosed. A masking function is applied to the encoded video prior to transmittal of the encoded video to a decoder. In this way, when the video is decoded by the decoder, the resulting video is masked such that a third party cannot usefully use the video. For example, frames may be inserted or rearranged, or only part of the video may be decoded by the decoder. As such, the quality of the decoded video is degraded. An unmasking function is applied to the decoded video in order to re-establish the original video content prior to display of the decoded video. This approach protects the security of the media data of the decoded video during the decoding process, whilst enabling the media data to be subsequently converted into a consumable format within the secure application. The security of the video decoding process is thus improved.

In some aspects of the disclosure a system comprises a system for decoding an encoded video. The system comprises a masking unit configured to receive the encoded video, the encoded video comprising a plurality of access units, and mask the encoded video to form a masked encoded video; a decoder configured to receive and decode the masked encoded video to form a masked decoded video; and an unmasking unit configured to receive the masked decoded video and unmask the masked decoded video to form an unmasked decoded video. In other aspects of the disclosure, a method comprises a method for decoding an encoded video, comprising: receiving the encoded video comprising a plurality of access units; performing a masking function on the encoded video to form a masked encoded video; transmitting the encoded masked video to a decoder arranged to decode the encoded masked video; receiving the decoded masked video from the decoder; and performing an unmasking function on the decoded masked data to form an unmasked decoded video.

The masking and unmasking functions can be performed in a plurality of ways. Examples of different masking and unmasking processes are described below. The decoder to which the masked, encoded, video is transmitted may be a third party decoder. The decoder may be a hardware decoder. Alternatively, the decoder may be a software decoder outside of a software application which receives the encoded video. In such cases, the software application has no control over the security of the decoder. It is therefore possible that the decoder is not secure, i.e. that it has been compromised without the knowledge of the provider of the video content, or without the knowledge of a software application which receives the encoded video from the application provider. As such, an unsecured decoder provides an opportunity to steal or otherwise extract contents of the video in order to exploit or redistribute the contents without the knowledge of the application provider or software application. Such stolen content can be illegally redistributed.

Masking the video content prior to transmission to the decoder can facilitate the reduction or removal of the risk of the content being stolen, since the decoded video which would be accessible to a third party at the decoder is masked in a manner which renders the video useless. The subsequent unmasking is preferably performed within the software application. Preferably, the software application is a secure application, for example a proprietary software application of the application provider, or a software application otherwise affiliated with the application provider. Since the masking and unmasking takes place within a secure environment, third parties cannot access the encoded video before the masking process, or access the decoded video after the masking process. Moreover, third parties cannot access the information necessary to perform an unmasking function on any intercepted, decoded, video content passing between the masking and unmasking units, and therefore cannot perform the unmasking function themselves. Preferably, metadata or other information is passed between the masking unit and the unmasking unit within the (secure) software environment to enable the unmasking unit to perform a suitable unmasking function on the masked decoded video received from the decoder.

In one embodiment, the masking function is performed through the insertion of at least one dummy access unit into the encoded video. This approach is termed dummy access unit adding (DAA). The dummy access unit or units can either be reference units or non-reference units. Preferably, at least one dummy access unit inserted into the encoded video is a reference dummy access unit. In previous methods which modified the Picture Order Count, insertion of such a reference access unit into a video affected the decoding process, meaning that the resulting video was incorrectly decoded by the decoder. However, it has been recognised that a list of reference access units associated with the encoded video, and provided to the decoder to assist in the decoding process, can be modified to compensate for the insertion of one or more reference dummy access units. Additionally or alternatively, the reference access units associated with the encoded video can themselves be modified to compensate for the inserted at least one reference dummy access unit. In this way, the video is correctly decoded by the decoder. The ability to insert both reference and non-reference access units facilitates an improved masking process which is more flexible than previous approaches.

The unmasking function of this embodiment is performed through removal of the decoded video frames which correspond to each of the inserted dummy access units. Without the removal of these frames, the resulting video is degraded, since erroneous video frames frequently appear within the video. The decoded, and masked, video is too degraded to be viewed or otherwise commercialised by an illegal redistribution network. Metadata passed between the masking unit and the unmasking unit within the secure software application informs the unmasking unit of the position of the erroneous frames to be removed. The unmasking function is performed before the decoded video is passed to the renderer for display.

In a second embodiment, the masking function is performed through the splitting of access units within the encoded video. This approach is termed access unit splitting (ASP). At least one access unit of the encoded video is selected to be masked, and this selected access unit is split into at least one set of two or more access units - hereinafter referred to as sub dummy access units - to form a masked encoded video. Preferably, each of the two or more sub dummy access units of each set comprise a subset of the information in the selected, original, access unit. This arrangement is possible due to the linearity of the spectral coefficients of most video compression standards.

In this embodiment, the decoder decodes each of the two or more sub dummy access units to form two or more corresponding frames, each of which are only partially representative of the frame that would have resulted from decoding of the original selected access unit. In this manner content is degraded, since multiple frames of the decoded video each comprise only some information of the original video frame. Were the video to be intercepted during the decoding process and these partial frames individually rendered as a full frame, the resulting video would contain incomplete copies of the original frame, in which the images within the frame flicker or move around or are delayed relative to one another. In the present embodiment, an unmasking function is performed in which the two or more frames corresponding to the two or more sub dummy access units are combined into a single frame which is representative of the selected access unit in order to form an unmasked decoded video - the original video frame is re-established and thus the video is properly rendered.

Splitting the selected access unit may comprise selecting a macroblock of the selected access unit and decomposing discrete cosine transform (DCT) coefficients of this selected macroblock of the selected access unit into multiple matrices of DCT coefficients. These matrices are then attributed to co-located macroblocks of the two or more sub dummy access units which correspond to the selected macroblock. The co-located macroblocks of the two or more sub dummy access units are macroblocks which are co-located, or located in the same spatial position, as the selected macroblock of the selected access unit to be split. Each set of sub dummy access units comprises a parent sub dummy access unit and at least one child sub dummy access unit; these are the first and subsequent sub dummy access units, respectively. Optionally, the DCT matrices are attributed to each of the co-located macroblocks of the child access units, whilst the DCT coefficients of the co-located macroblock of the parent access unit are set to zero.

The unmasking function of combining two or more frames corresponding to two or more sub dummy access units may further comprise removing the frames corresponding to each of the two or more sub dummy access units from the masked decoded video and combining the pixels of these frames which correspond to the macroblocks co-located with the selected macroblock to form a frame representative of the original selected AU.

In particular, combining the pixels of these two or more frames can recover the pixels corresponding to the decoded selected access unit and a frame representative of the original selected access unit can be recovered by combining the individual frames representative of each of the two or more sub dummy access units. The sub dummy frames are removed before the decoded video is rendered for display.

In a third embodiment, the masking function is performed through the exchanging of macroblocks of an access unit within the encoded video, or block exchanging (BEX). At least one access unit is selected from the encoded video, and at least one pair of macroblocks of the at least one selected access unit is chosen for exchange. In particular, a position of the selected macroblocks within the at least one pair is exchanged in order to form a masked encoded video. In this way, the decoded video will comprise a frame corresponding to the selected access unit in which pixels of the frame (which correspond to the selected macroblocks) are in the wrong position - the video content is therefore degraded.

The unmasking function performed by the unmasking unit comprises exchanging a position of pixels corresponding to the macroblocks of the at least one pair of selected macroblocks in order to restore the video. As such, metadata is preferably passed between the masking unit and the unmasking unit, informing the unmasking unit of the location of the selected macroblocks (and thus the location of the corresponding pixels within the decoded video frame). In some embodiments the selected macroblocks are predictively encoded, and the masking unit may then be further configured to modify motion vectors between the selected macroblocks and respective reference blocks within the encoded video. Modifying motion vectors in this way can ensure that the selected macroblocks are correctly decoded, since each macroblock still refers to the correct reference block, despite the change in its spatial position. As such, no further compensation of the resulting pixels is required, since each frame corresponding to the selected access unit merely comprises blocks of correctly decoded pixels in the wrong position - the unmasking unit can simply exchange the position of the blocks of pixels to form an unmasked decoded video and thus re-establish the original video content.

In a fourth embodiment, the masking function is performed by splitting the encoded video stream, or by decoder splitting (DSP). In particular, the masking unit is configured to split the encoded video into a first stream and a second stream, send the first stream of encoded video to a first decoder, and send the second stream of encoded video to a second decoder. The first decoder receives and decodes the first stream, and the second decoder receives and decodes the second stream. In this embodiment, the first decoder is a third party decoder, optionally a hardware decoder. Optionally, the third-party decoder is an unsecured hardware decoder. Preferably, the second decoder is a secure decoder. Optionally, the second decoder can be located within the same software application as the masking unit and the unmasking unit. In this manner, decoding of the second stream can be securely performed, without the possibility of compromise or interception by a third party.

Since the first decoder, or third-party decoder, only receives part of the video stream, the resulting decoded video content is not suitable for consumption or commercialisation. The masking unit is configured to receive a first stream of decoded video from the first decoder and to receive a second stream of decoded video from the second decoder. The masking unit then combines the first stream of decoded video and the second stream of decoded video to form the resulting decoded video. Preferably, metadata is passed between the masking unit and the unmasking unit regarding how the encoded video was split into the two streams, such that the unmasking unit can correctly reassemble or combine the streams. This arrangement facilitates the easy and efficient disassembly/reassembly of the original video stream into two separate streams and back, whilst making recovery of video content intercepted at the hardware decoder impossible. The missing decoded frames (due to the missing access units of the second stream) cannot be interpolated or extrapolated to replace the missing content. As such, this method provides an effective masking function.

Further aspects of the disclosure relate to a system and non-transitory computer readable storage media for carrying out each of the embodiments described above.

In the following description, programs will be referred to as applications. In any of the embodiments, application is to be interpreted as application software. For example, an application can be any program or piece of software designed to perform a group of coordinated functions or tasks on a computing device. Application is not limited to mobile applications (or "apps"), for example, those downloaded to a mobile device or other hand held electronic device (e.g., a smartphone or a tablet). The term application provider is used herein to describe a software program or hardware which provides content to such an application. This content can be media content, such as music or video, or any other data.

In any of the embodiments, information passing between the masking unit and the unmasking unit is implemented as metadata, i.e. as information and/or data contained in, provided by, or related to, the masking function or unmasking function. For example, the masking metadata can be information regarding the temporal position (timestamp) of selected access units or frames within the video, the spatial position of selected macroblocks or pixel blocks within an access unit or frame, information regarding the location of sets of frames or groups of pictures within the video, or other data. The masking metadata can be used to implement the desired masking and unmasking functions.

Some specific embodiments are now described by way of illustration with reference to the accompanying drawings in which like reference numerals refer to like features.

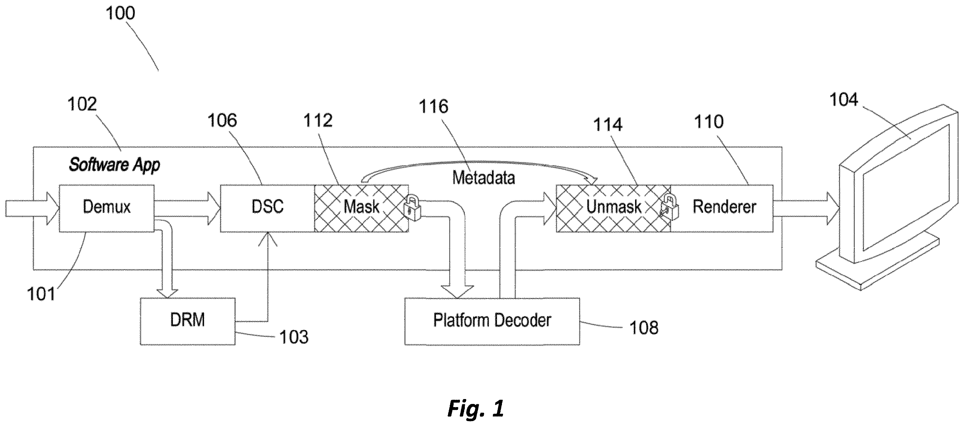

With reference to Figure 1, a system 100 comprises a software application 102. The software application runs on a device which is in communication with display device 104. As an example, the software application 102 is a media player application. Media content, such as an encoded video, is received by a software application 102 from an external application provider. The received encrypted and compressed video is initially handled by a de-multiplexer 101, a Digital Rights Management (DRM) component 103, and a DeSCrambler (DSC) component 106. The DRM component 103 and DSC component 106 are preferably on the same platform to allow for a secure media pathway, but need not be. Provided the DRM component 103 confirms possession of the required rights to view the media content, the DSC 106 then transforms the encrypted compressed media content into an unscrambled, clear, format for transmission to a third party platform decoder 108. This compressed (or encoded), video data is uncompressed or decoded by the decoder 108 and then the decoded video data is transmitted back to the application 102 to be rendered by renderer 110 for display on display device 104.

Whilst transmission of video or other media content to the software application 102 from an external content or application provider (i.e. from a pay TV content provider) is encrypted, the transmission between the software application 102 and the platform decoder 108 is necessarily unencrypted. As such, this transmission occurs outside of the security of the software application 102 and can be subject to interception or interference by third parties without the knowledge of the software application 102 or the content provider. Moreover, the simple fact of the decoder being a non-proprietary platform decoder outside of the software application legitimises an entry point into the (normally highly protected) processing chain of the content handling software application 102. For example, video content can be stolen from the decoder for subsequent redistribution and commercialisation without the knowledge of either the external application provider or the software application.

To protect the security of the data being transmitted to the decoder in the event of such interception, a masking component 112 and an unmasking component 114 can be employed by the software application 102. The masking component 112 performs a masking function upon the decrypted, compressed video content. This masking function is applied in a way that ensures the platform decoder 108 can still decode the masked data (i.e. that the masked data conforms to the required compression standard), but that the resulting content is too degraded to be commercialised or consumed via an illegal redistribution network. For example, the masking component may be configured to produce an MPEG compliant video comprising masked MPEG sequences that will be decoded by a standard MPEG decoder. When the masked, but otherwise raw (unencrypted and decoded) video data is fed back to the software application 102, the unmasking component 114 performs an inverse operation to restore the original video stream before passing it to the renderer. In this way, the video content is protected from third parties.

Although the masking and unmasking components perform inverse operations, these two components handle different types of input/output data. The masking component 112 transforms compressed data into a scrambled format, while the unmasking component 114 performs an inverse unscrambling function on uncompressed data. In this regard, the masking and unmasking functions of the present disclosure are distinct from conventional encrypting/decrypting components, in which both the encrypting function and its inverse decryption function are performed on the same form of data (compressed or uncompressed); the masking function is performed on compressed, or encoded, data, whilst the unmasking function is performed on uncompressed, or decoded, data. It is essential that the masking process does not interfere with the decoding process itself, but only affects the decoded output of the decoder 108.

There is necessarily synchronisation between the masking component 112 and the unmasking component 114 in order for the video stream to be restored or re-established. For example, metadata 116 about the masking function can be passed to the unmasking component 114 in order that the unmasking component 114 can perform the inverse of the masking function. Advantageously, this metadata 116 is passed within the secure environment of the software application 102 and thus is not exposed to possible interception.

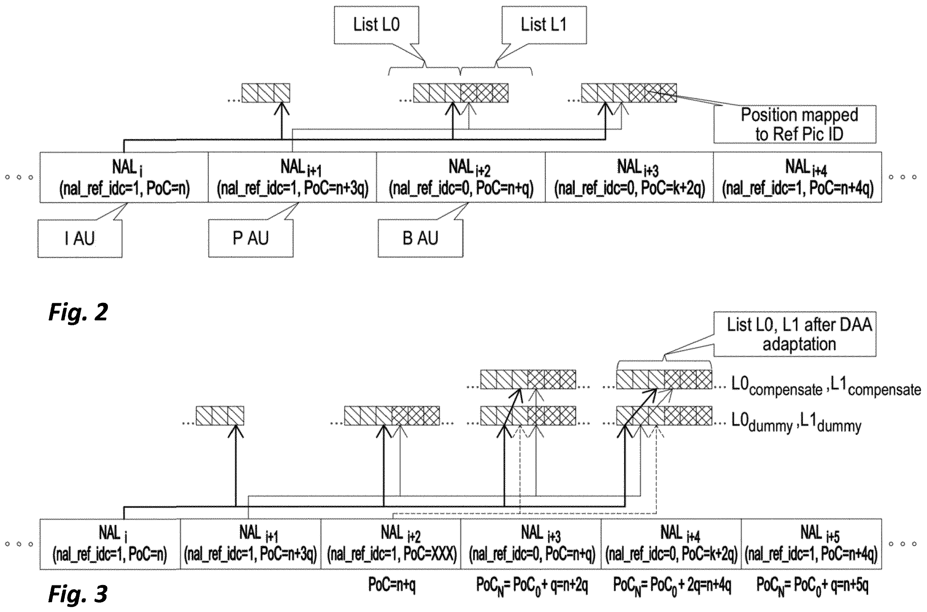

Four different embodiments of this masking and unmasking process are described below with references to Figures 2 to 6. These different masking processes are: Dummy Access Unit Adding, Access Unit Splitting, Block Exchanging and Decoder Splitting. Essentially, these methods scramble the output decoded video such that the output is not representative of the original video stream. Each method can be used independently to scramble the video or, alternatively, one or more methods can be used in any suitable combination to enhance the masking process.

A video stream is comprised of Access Units, where each Access Unit (AU) represents one image, or one frame, of the video. In other words, an AU represents meaningful units of content or information to be handled or decoded independently of one another. In the MPEG-4 standard, an AU can be represented by a set of Network Abstraction Layers (NAL). Each NAL unit is a packet containing an integer number of bytes of data. The NALs provide an arrangement for packaging the content containing Access Unit within a compressed stream suitable for transportation over a network, for example. The masking techniques described herein cause intentional distortion of Access Units and thus media content through the manipulation of, or modification to, this compressed content stream. The following description provides an example of how to mask video content in the MPEG-4 standard by modifying the NALs, but the overarching concept of distorting content by modifying Access Units can be applied equally to other formats. For example, the masking techniques described here can be applied to the content represented by AUs when handling other formats which do not use NAL data structures, such as the MPEG-2 standard.

In the H.264 standard, the first byte of each NAL unit is a header that contains an indication of the type of data in the NAL unit (though the header information is different for different standards, for example, in the HEVC standard the first two bytes is the header). The remainder of the NAL unit contains data of the type indicated by the header. There are two types of NAL unit: system NAL units and Video Coding Layer (VCL) NAL units. System NAL units carry information which is used indirectly in the decoding process, such as Sequence Parameter Sets (SPS) or Picture Parameter Sets (PPS), and other information which enhances the usability of the decoded video signal. The VCL NAL units contain the compressed data of the associated encoded frame. A VCL NAL unit can be a non-reference NAL or a reference NAL. When decoding a reference NAL unit, the decoder must store the decoded data in its internal member as a reference, since this data is required for the subsequent decoding of other NAL units (whether reference or non-reference). In contrast, the decoded data of a non-reference NAL unit does not need to be stored by the decoder and can be passed directly to the renderer.

In video compression based on motion compensation, there are typically three types of encoded frames: Intra (I), Predicted (P) and Bi-directionally predicted (B). Conventionally, a frame encoded as I or P will be used as a predictor (or reference) to encode successive frames. Therefore, the associated NAL units for I or P frames are often reference NAL units. The flexibility of the H.264 standard allows the possibility that a B frame can comprise reference NAL units also (in former standards, the B frame was exclusively formed of non-reference NAL units).

One image or frame of a video can be divided into several slices before encoding. Each slice is encoded or packaged into an individual VCL NAL, and the NALs for each of the slices together form an Access Unit (AU). In the following figures, Access Units (AUs) are shown to be comprised of a single NAL for the purposes of illustration and simplicity only. It will thus be understood that, where the figures show a sequence of NAL units, this equates to a corresponding sequence of AUs (and hence a sequence of video frames), each of a single NAL unit. In the following description, inserting or splitting an AU involves inserting or splitting all of the associated NAL units of said AU.

Reference images resulting from the decoding of reference NALs within a video stream are stored in lists (here lists L0 and L1 in Figure 2) prior to decoding any successive NALs. Decoding P frames uses a single list L0 of reference pictures, while decoding B frames uses both lists, L0 and L1. The size of L0 and L1 is limited by num_ref_idx_l0_default_active_minus1 and num_ref_idx_l1_default_active_minus1 (which are two fields in the PPS system NAL). This arrangement means that decoded reference data, such as a reference image, can be used as a predictor or reference for decoding successive NALs only within a limited interval; the reference data will be rejected out of the two reference lists once it is sufficiently far removed from the NAL currently being decoded. The H.264 standard also provides techniques which enable the reference data to be rejected prematurely. These techniques are as follows:

1. Directly modifying the reference list: In the NAL header, setting ref_pic_list_modification_flag_l0 and ref_pic_list_modification_flag_l1 to 1 opens the possibility to reorder the pictures in the lists L0 and L1.
2. Directly controlling the decoded reference data: In the NAL header, setting adaptive ref pic marking mode flag to 1 also instructs the decoder to reorder the reference data or images in the lists L0 and L1. This method can also allow a reference image to be marked as "unused for reference"; this results in immediate rejection of the reference image, as if it were a non-reference image or non-reference data.

These two methods can be exploited to enable insertion of reference dummy access units during a masking function in a manner not previously possible. By directly modifying the reference lists, the dummy access units are virtually indistinguishable from the original access units and therefore any third parties who intercept the masked content cannot easily eliminate the dummy access units from the video stream. In previous approaches to video content protection, for example that described in US 2015/01635220 A1, the Picture Order Count (POC), that is, the order in which the stream of AUs are to be presented, was changed by inserting or rearranging AUs. In this approach, inserting reference AUs required modification of every subsequent AU to prevent referencing of the inserted reference AU, since the reference lists could not be changed; therefore the inserted reference (dummy) AUs were easily detected by a third party and the masking function could be reversed. As such, the approach taken in US 2015/01635220 A1 is to only insert non-reference AUs, which are less easily detected by third parties; this limits the efficacy of prior masking methods.

With reference to Figures 2 and 3, a method of masking implemented by software application 102 in accordance with the first embodiment of Dummy Access Unit Adding (DAA) is now described. Instead of repositioning only the non-reference AUs to scramble the display order of the output video, it has been found that both dummy reference AUs and dummy non-reference AUs can be inserted into the encoded stream in a straightforward manner, either by dynamic modification of the reference lists L0, L1 shown in Figure 2 to account for the change in AU order, or by modifying the decoded reference NAL itself.

Figure 2 illustrates a stream of AUs comprising an encoded video, and example reference lists L0, L1 required for decoding the reference NALs in a subsequent video decoding process. Figure 3 illustrates the same stream, but with the insertion of an additional, dummy, access unit ($NAL_{i+2}$). The dummy access units inserted can be reference units or non-reference units. As illustrated in Figure 3, the dummy access unit $NAL_{i+2}$ inserted into the encoded video stream is a reference dummy access unit (the field nal_ref_idc is set to 1 to indicate it is a reference NAL).

Following the method of US 2015/01635220 A1, this insertion of a reference unit would result in the incorrect decoding of the frames, since incorrect parameter and timing information, for example, from $NAL_{i+2}$ would be applied to the subsequent sequence of access units, AUs, $NAL_{i+3}$ and $NAL_{i+4}$ (which correspond to access units $NAL_{i+2}$ and $NAL_{i+3}$ of Figure 2, i.e. the situation in which there is no dummy access unit). This is because the dummy image decoded from dummy access unit $NAL_{i+2}$ is present in the list L0, L1 for decoding the subsequent NALs (such as $NAL_{i+3}$ and $NAL_{i+4}$). The lists L0, L1 which would be generated due to the insertion of the dummy access unit $NAL_{i+2}$ are shown in Figure 3 as $L0_{Dummy}$ and $L1_{Dummy}$ respectively; it is apparent that the subsequent frames represented by $NAL_{i+3}$ and $NAL_{i+4}$ will not be decoded correctly since the generated lists $L0_{Dummy}$, $L1_{Dummy}$ now contain the incorrect references or predictors.

However, the DAA method described herein facilitates the introduction of dummy reference AUs as well as dummy non-reference AUs whilst conserving the original reference lists ($L0_{compensate}$ and $L1_{Compensate}$). As can be seen in Figure 3, the reference lists are dynamically modified or compensated such that $NAL_{i+3}$ and $NAL_{i+4}$ retain the predictors or references they had originally in reference lists L0, L1. In one embodiment, the reference lists are directly modified so that the dummy image is not referred to as a predictor for any other NALs. As result of this modification, the decoder will use the reference lists $L0_{compensate}$ and $L1_{Compensate}$ to decode the $NAL_{i+3}$, rather than $L0_{Dummy}$ and $L1_{Dummy}$. Indeed, the modified lists $L0_{Compensate}$ and $L1_{Compensate}$ are identical to the original version of the lists L0, L1 (i.e. the lists before the insertion of the dummy image). Hence the $NAL_{i+3}$ in Figure 3 will be decoded correctly. The same process is applied to $NAL_{i+4}$ and other subsequent NALs.

In an alternative embodiment, the decoded reference image is explicitly set to be a non-reference image. This ensures each AU is correctly decoded, whilst scrambling the output decoded video through the addition of dummy reference and non-reference AUs. The ability to insert both reference and non-reference access units facilitates an improved masking process which is more flexible than previous approaches.

The original video is then restored by removing the dummy frames corresponding to the inserted AUs - the original video content, or sequence of frames, is simply a subset of the content received from the decoding process. Alternatively, or additionally, this addition of AUs can be the addition of AUs from other parts of the video stream, rather than the addition of unrelated, dummy, AUs. In this example, the original video content, or sequence of frames, is simply a re-ordering of the content received from the decoding process. In both examples, the metadata 116 of this embodiment provides the location of the inserted dummy AUs or the relocated AUs such that the unmasking unit 114 can successfully unmask the decoded masked video to establish the original video content.

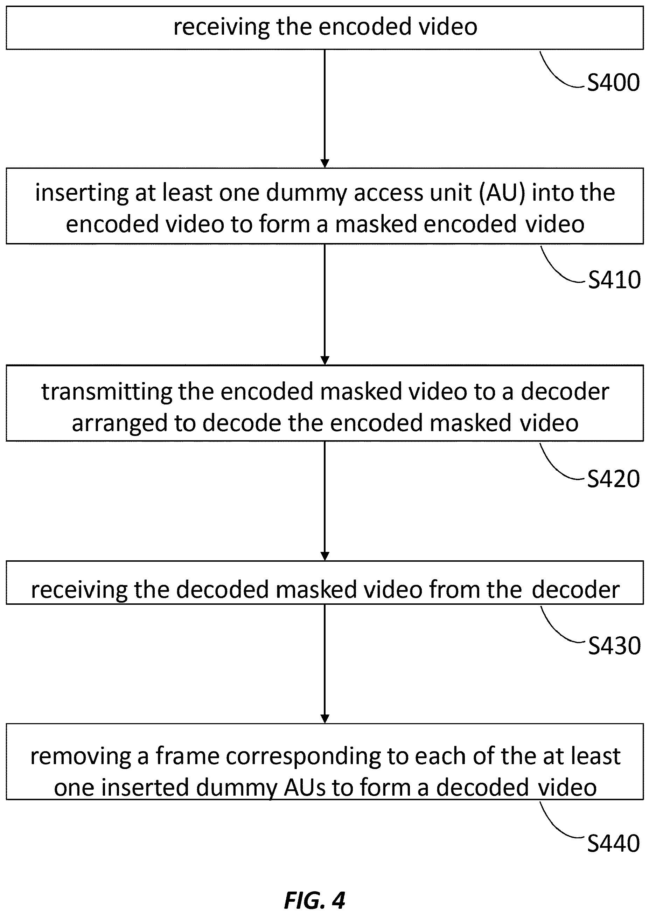

The above described DAA, or Dummy Access Unit Adding, method is detailed in Figure 4. Firstly, at step S400 the encoded video is received from the application provider by the software application. The masking unit inserts at least one dummy access unit into the encoded video to form a masked encoded video at step S410. The masking unit then sends or transmits the encoded masked video to a decoder arranged to decode the encoded masked video (step S420). In this embodiment, the decoder is a third-party decoder. At step S430, the unmasking unit receives the decoded masked video from the decoder and performs an unmasking function (step S440). The unmasking function is the removal of a frame corresponding to each of the at least one inserted dummy access units to form an unmasked decoded video which is a subset of the masked video decoded by the decoder. Alternatively, when the masking process is reordering of the access units, the unmasked decoded video is not a subset of the masked decoded video but a rearrangement. An additional step S450, in which metadata 116 relating to the masking and unmasking functions is passed between the masking unit and the unmasking unit, can optionally be performed at any point between steps S410 and S440.

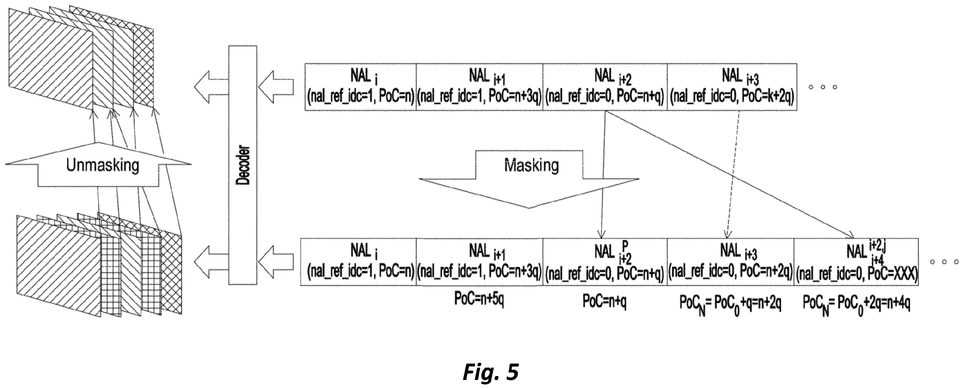

With reference to Figure 5, a method of masking implemented by software application 102 in accordance with the second embodiment of Access Unit Splitting (ASP) is now described. In the ASP masking technique, a selected AU ($NAL_{i+2}$) to be masked is split into two or more AUs (or *N* AUs, where *N* >=2) called sub dummy AUs. In particular, the selected AU can be split into at least one set of sub dummy AUs, where the at least one set of sub dummy AUs comprises at least two sub dummy AUs. These two or more sub dummy AUs are initially direct clones of the selected AU, and can be distributed consecutively or non-consecutively within the encoded video stream. The sub dummy AUs can be reference or non-reference AUs. If at least one of the sub dummy AUs is a reference NAL, the reference lists should be dynamically modified as described above with reference to Figure 3 to ensure the correct references are used for the correct decoding of the video. The selected AU should not be referenced by subsequent frames, since the splitting of this selected AU will affect the decoding process of the subsequent frames.

The two or more sub dummy access units comprise a parent AU and one or more child sub dummy AUs (or *j* children AU, where *j* >= 1). Although initially clones of the selected access unit, the information contained within these two or more sub dummy access units is subsequently modified such that each parent and child sum dummy access unit contains a subset of the information contained within the original selected access unit. This distribution of information between access units within the encoded video stream is achieved by distributing discrete cosine transform (DCT) coefficients of a selected macro block of the selected access unit across the two or more access sub dummy units.

In particular, with reference to Figure 5 it can be seen that a selected access unit $NAL_{i+2}$ is cloned to form a parent sub dummy AU $\left(NAL_{i+2}^{p}\right)$ and one or more children sub dummy AUs $\left(NAL_{i+4}^{i+2,j}\right)$, where the second part *j* of the superscript is the index of the child AU in the case of multiple children AUs, and the first part *i+2* of the superscript refers to the index of the associated selected parent access unit, $NAL_{i+2}$. The subscript *i+4* is the position in the stream where the respective child AU is inserted. Preferably, the children sub dummy AUs are distributed throughout the video stream to prevent detection by third parties.

At least one macroblock of the selected access unit is then selected to be masked, and the discrete cosine transform (DCT) coefficients (for example, an integer matrix of size 4x4 or 8x8) of the selected macro block are decomposed into DCT matrices. These DCT matrices are attributed to co-located macro blocks of the one or more child sub dummy access units, which co-located macroblocks correspond to the selected macroblock. The term "co-located" defines the macroblocks of the sub dummy access units as being those macroblocks with the same spatial position in the corresponding sub dummy frames as the original selected macroblock. The decomposition and distribution of the DCT coefficients can be expressed mathematically as:

$$\mathbf{DCT} = \sum_{j=1}^{N-1} \left(a_j . \mathbf{DCT}\right) = \sum_{j=1}^{N-1} \mathbf{DCT}_j$$

where DCT is the matrix of the original DCT coefficients in the selected masked macroblock, $\mathbf{DCT}_j$ is the decomposed DCT matrix attributed to the co-located macroblock of the *j*th child sub dummy AU ($j \in$ [1...N-1]) and $a_j$ are the weights of the decomposition between the N-1 sub dummy children AUs. The weights $a_j$ must satisfy the following equation:

$$\sum_{j=1}^{N-1} a_j = 1$$

With regard to the parent sub dummy access unit $NAL_{i+2}^{p}$, the co-located macro block corresponding to the selected macro block of the original selected access unit $NAL_{i+2}$ is modified such that the DCT coefficients are set to 0.

Once the two or more sub dummy access units formed by splitting the selected access unit $NAL_{i+2}$ are distributed throughout the video stream, they can all be independently decoded. Since the inverse DCT is a linear process, the decoded macroblocks (which correspond to pixels of the resulting decoded video frames) can be added back together, or combined, in the unmasking process to recover the pixels corresponding to the original selected macroblock of the selected AU, $NAL_{i+2}$. In particular, since the location of the parent and child sub dummy frames (decoded from the parent and children sub dummy AUs, respectively) are known by the unmasking unit, and the position of the macroblocks which were masked are known (due to transmission of metadata 116 between the masking unit and the unmasking unit), pixel manipulation can be performed to recover the original macroblock as follows:

$$I = \text{IDCT}\left(\sum_{j=1}^{N-1} \text{DCT}_j\right)$$

In other words:

$$I = I_{parent} + \sum_{j=1}^{N-1}\left(I_{parent} + \text{IDCT}(\text{DCT}_j)\right) - I_{parent} \cdot \sum_{j=1}^{N-1} 1 = \sum_{j=1}^{N-1} I_{child,j} - I_{parent} \cdot (N-2)$$

where $I, I_{child,j}, I_{parent}$ are the pixel matrices of the original selected macroblock, and the $j^{th}$ co-located child and parent macroblocks respectively. IDCT is the inverse DCT transformation to calculate the pixel values from the DCT coefficients.

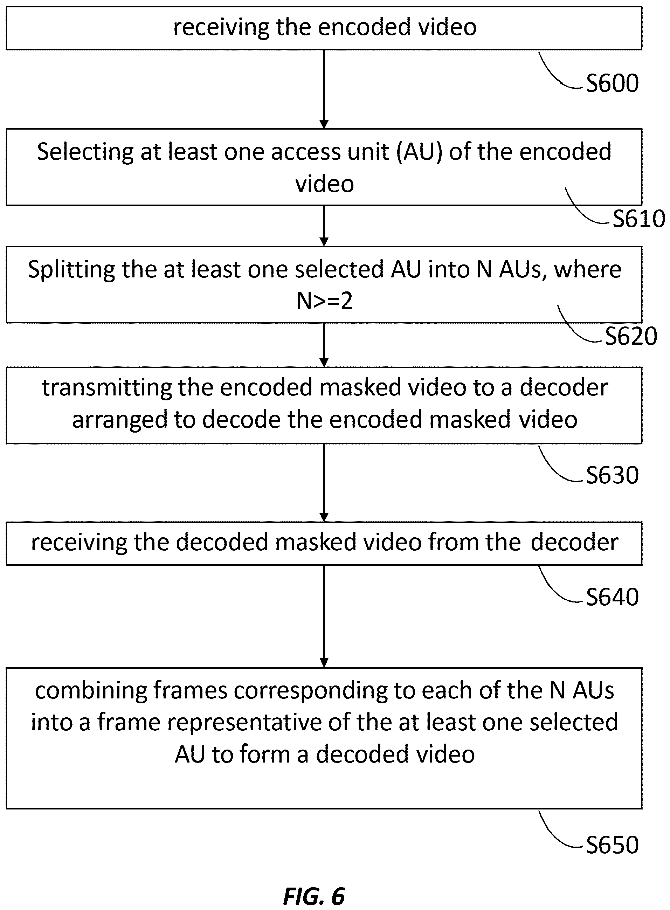

The above described ASP, or Access Unit Splitting, method is detailed in Figure 6. Firstly, at step S600 the encoded video is received from the application provider by the software application. The masking unit then selects at least one access unit of the encoded video to be masked at step S610, and then splits the at least one selected access unit into two or more sub dummy access units at step S620. The masking unit then sends or transmits the encoded masked video to a decoder arranged to decode the encoded masked video (step S630). In this embodiment, the decoder is a third-party decoder. At step S640, the unmasking unit receives the decoded masked video from the decoder and performs an unmasking function (step S650). The unmasking function is the combining of the frames corresponding to each of the two or more sub dummy access units into a frame representative of the selected access unit to form an unmasked decoded video.

Step 620, or the splitting of the selected access unit, can optionally comprise the steps of: cloning the selected access unit to form *N* sub dummy AUs, where *N*>=2; selecting a macroblock of the selected AU; decomposing discrete cosine transform (DCT) coefficients of the selected macroblock into DCT matrices; attributing the DCT matrices to macroblocks of the *N* sub dummy AUs which correspond to the selected macroblock of the selected AU; and distributing the *N* sub dummy access units through the encoded video. Step 650, or the combining of the frames, can optionally comprise the steps of: removing frames corresponding to each of the *N sub* dummy access units from the masked decoded video; and recovering pixels corresponding to the selected macro block by combining pixels corresponding to the macro blocks of the *N* access units. The steps of distributing the *N* sub dummy access units, and the step of removing frames corresponding to each of the *N* access units can occur at any suitable point within the method. An additional step S660, in which metadata 116 relating to the masking and unmasking functions is passed between the masking unit and the unmasking unit, can optionally be performed at any point between steps S610 and S650.

In the compression standard H.264, the application of a deblocking filter during the decoding process can slightly change the decoded pixel values for those pixels which occur close to the boundary of the co-located macroblocks in the sub dummy frame. As a result, when these pixel values are summed up during the unmasking process in order to re-establish the frame corresponding to the original selected AU, the pixel values may not sum perfectly to the pixel values of the original frame for that selected AU. Therefore, in some embodiments, the masking component is configured to disable application of the deblocking filter for the sub dummy AUs. This can be set to be disabled in the NAL header. The platform decoder then leaves the boundary pixel-values intact. During a subsequent unmasking process, a deblocking filter is applied to the pixel-values after recovering the sub dummy frames.

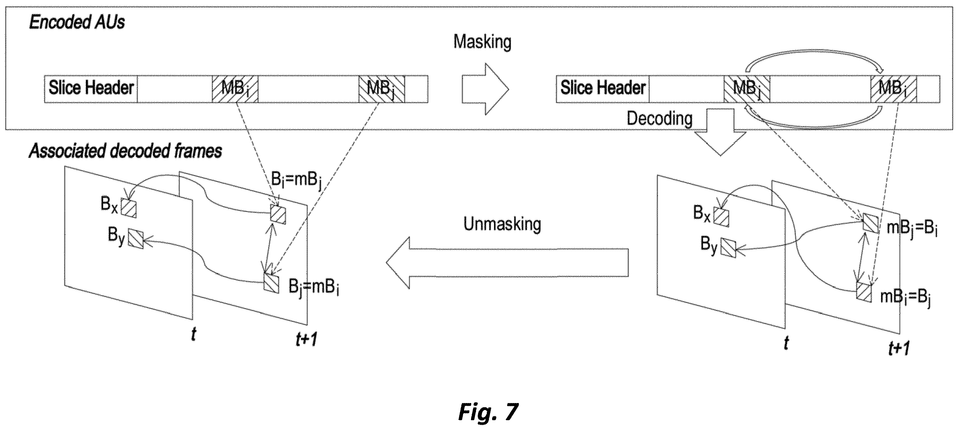

With reference to Figure 7, a method of masking implemented by software application 102 in accordance with the third embodiment of Block Exchanging (BEX) is now described. In a similar manner to the above second embodiment, the BEX method of this third embodiment utilises macroblocks to scramble or mask the encoded video and improve security. In particular, the BEX method exchanges macroblock pairs spatially within a frame. In this embodiment, the number of access units is unchanged during the masking process (no dummy access or sub access units are added), therefore the Picture Order Count is unchanged.

Figure 7 shows an example of the positions of the selected macro blocks within the decoded image frames at a time t+1. Considering the frames at time t+1 before and after masking, it can be seen that the original spatial positions of two selected macroblocks $B_i$ and $B_j$ within an AU are switched during a masking process performed by the masking unit - the spatial position i originally attributed to $B_i$ is assigned to $B_j$ and the spatial position j originally attributed to $B_j$ is assigned to $B_i$.

If the exchanged blocks are inter-frame encoded, their motion vectors are necessarily adjusted so that they point to the same predictors as before. For instance, in Figure 7, after being masked (Figure 7 right hand side) the macroblock $B_i$ found now at the spatial location j continues to point to reference block $B_x$ as its reference for decoding. For the sake of simplicity, Figure 7 illustrates the case where the reference blocks $B_x$ and $B_y$ occur in a frame at a time t which immediately precedes the frame at the time t+1. The two arrows from position i attributed to masked block $B_j$ on frame t+1 to block $B_y$ on frame t and from position j attributed to masked block $B_i$ on frame t+1 to block $B_x$ on frame t (shown on the right hand side of Figure 7) illustrates this adaptation of the motion vectors.

If the exchanged blocks are intra-frame encoded, their DCT coefficients are necessarily compensated. This is because intra-frame encoding using the H.264 standard encodes DCT coefficients differently to the encoding of a reference or predictor block. In the masked AU, the block $B_i$ is moved to a different position j, which leads to the modification of the predictor value. This change must be compensated for in the new DCT coefficients of block $B_i$ at position j. If the exchanged blocks are losslessly intra-frame encoded (Pulse Code Modulation PCM mode), there is no further modification to be applied to the exchanged macroblocks. The selected macroblocks can be encoded by any suitable combination of inter-frame encoding, intra-frame encoding and lossless intra-frame encoding.

The above arrangements ensure that the resulting decoded frame is correctly decoded, as the spatial position of the blocks are changed but the pixel-values themselves are not altered within the video stream. In other words, only the macroblocks within the AU are spatially switched, resulting in a corresponding switch of pixels within the decoded frame.

In order to unmask the decoded video, pixels corresponding to the selected macro blocks are swapped back to their original positions (as seen on the left of Figure 7); the pixels corresponding to macroblocks $B_i$ and $B_j$ occur at their original positions i and j respectively. The selected macroblocks to be masked can be spatially separated within the decoded frame. Alternatively, the selected macro blocks can be contiguous within the decoded frame.

As in the above described second embodiment, the pixel values at the boundary of the exchanged macroblocks may be altered due to the application of a deblocking filter. Preferably, the masking process will disable or deactivate application of the deblocking filter at least on the selected access unit when the BEX method is applied. As a post-processing of the unmasked decoded video, the unmasking component may apply the deblocking filter after the pixels are exchanged to correctly recover the pixel values as if there were no masking/unmasking processing being applied.

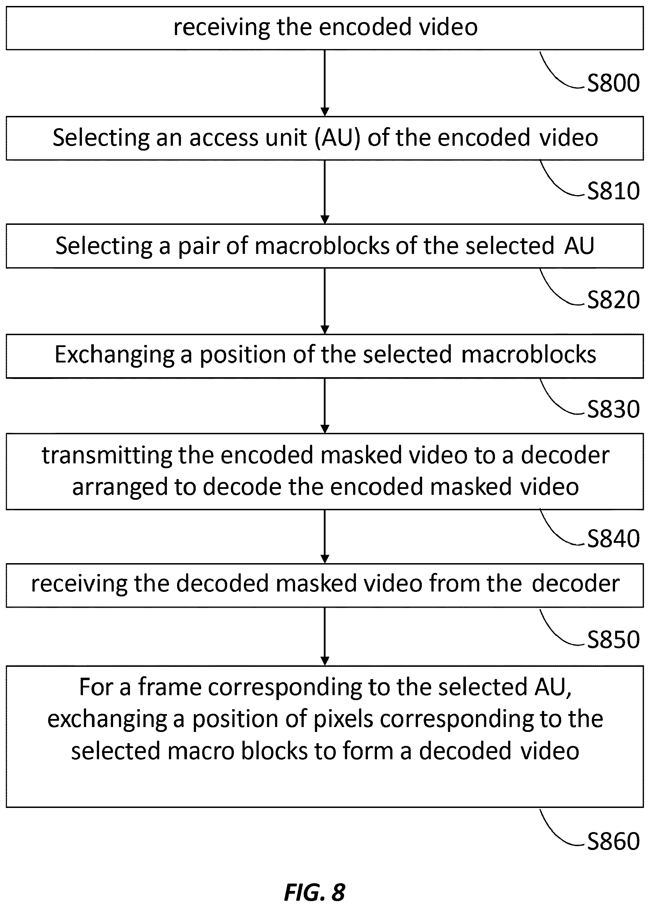

The above described BEX method is detailed in Figure 8. Firstly, at step S800 the encoded video is received from the application provider by the software application. The masking unit then selects an access unit of the encoded video to be masked at step S810, and then selects at least one pair of macroblocks of the selected access unit (S820). The masking unit then exchanges the position of macroblocks of the selected at least one pair macroblocks within the selected access unit (step S830). To ensure correct decoding of the video, the selected macroblocks should be temporarily not referenced by other AUs, or the exchange should be duplicated in all the AUs which reference the selected macroblocks. At step S840, the encoded masked video is transmitted to a decoder arranged to decode the encoded masked video. In this embodiment, the decoder is a third-party decoder. At step S850, the unmasking unit receives the decoded masked video from the decoder and performs an unmasking function (step S860). The unmasking function is the exchanging a position of pixels corresponding to the selected macroblocks for a frame corresponding to the selected AU; this forms an unmasked decoded video.

In some embodiments, an additional step S870 of modifying motion vectors between the selected macroblocks and respective reference blocks within the encoded video is performed. This step can be performed at any suitable point between steps S820 and S840. Modifying vectors at this point in the method ensures that the selected macroblocks are correctly decoded, since each macroblock still refers to the correct reference block, despite the change in its spatial position. An additional step S880, in which metadata 116 relating to the masking and unmasking functions is passed between the masking unit and the unmasking unit, can optionally be performed at any point between steps S810 and S860.

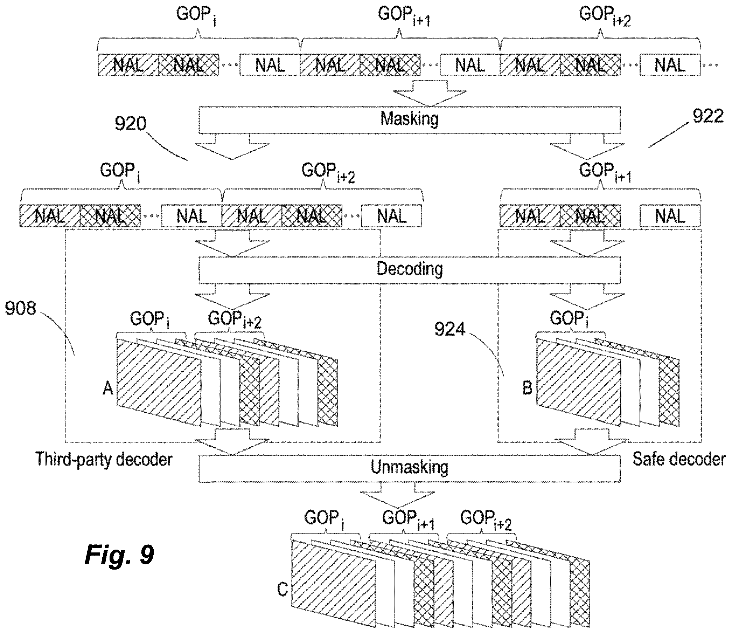

With reference to Figure 9, a method of masking implemented by software application 102 in accordance with the fourth embodiment of Decoder Splitting (DSP) is now described. In this embodiment, the number of access units is unchanged during the masking process (no dummy access or sub access units are added), therefore the Picture Order Count is unchanged. Instead, the DSP technique segments a compressed video stream into two sub streams: a main stream 920 (optionally) containing the majority of the data, is fed to platform first decoder 908, while a secondary stream 922 (optionally having less data than the main stream 920) is handled by a second decoder 924. The second decoder 924 is a secure decoder which could be, for example, within a trusted environment, or could be a software encoder within the software application 102. It is advantageous that the main stream 920 contains the majority of the data, since this is sent to the first decoder. The first decoder in this example is a third party platform decoder, which is typically a hardware decoder optimised for the decoding process. Meanwhile, the second stream is preferably sent to a secure decoder, which may be a software decoder, which is not as optimised for the decoding process as the hardware decoder. This adaptive division in the data between the two decoders improves the quality of the overall decoded video.

Figure 9 outlines the use of a group of pictures (GOP) based segmentation to feed the encoded video to the two decoders. A GOP is a collection of successive images or frames within an encoded video stream from which the visible frames are generated. Encountering a new GOP in a compressed video stream means that the decoder does not need any previous frames in order to decode the next ones, and allows fast seeking through the video. To divide the encoded video into two streams, a GOP is selected at a certain frequency. In this embodiment, the ratio of 1:1 is selected for the sake of simplicity. To achieve this ratio, groups of pictures with an index of i+1 (where i is an even integer) are selected. The selected group of pictures is removed from the original compressed stream and fed to the secure second decoder 924 (branch B in Figure 9).

The remaining compressed stream (group of pictures with indices i and i+2) is processed normally with the first, third-party, decoder 908 (branch A in Figure 9). Due to the self-contained property of GOPs, the two decoders can correctly decode the assigned input streams. When the masking component sends a GOP to branch B, it will inform the unmasking component via the secure transmission of metadata. The unmasking process can then retrieve the decoded contents from decoder 924 instead of decoder 908.

Synchronously combining the two decoded content segments, the correct order of the decoded sequence can be obtained to produce a sequence which corresponds perfectly to the original stream. Although Figure 9 illustrates a 1:1 ratio, in some examples the majority of the video stream is sent to the first decoder 908.

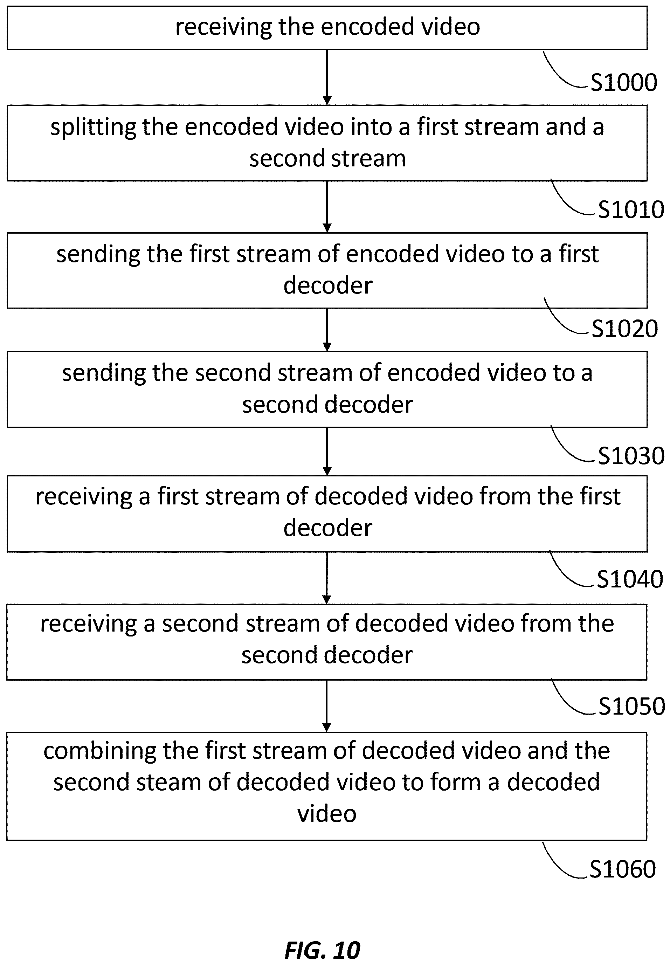

The above described DSP, or Decoder Splitting, method is detailed in Figure 10. Firstly, at step S1000 the encoded video is received from the application provider by the software application. The masking unit then splits the encoded video into a first stream and a second stream at step S1010. The first stream of encoded video is then sent to a first decoder at step S1020, whilst the second stream of encoded video is sent to a second decoder at step S1030. First and second streams of decoded video are then received by the unmasking unit from the first and second decoders at steps S1040 and S1050, respectively. At step S1060, the unmasking unit performs an unmasking function. The unmasking function is the combining of the first stream of decoded video and the second stream of decoded video to form an unmasked decoded video. An additional step S1070, in which metadata 116 relating to the masking and unmasking functions is passed between the masking unit and the unmasking unit, can optionally be performed at any point between steps S1100 and S1060.

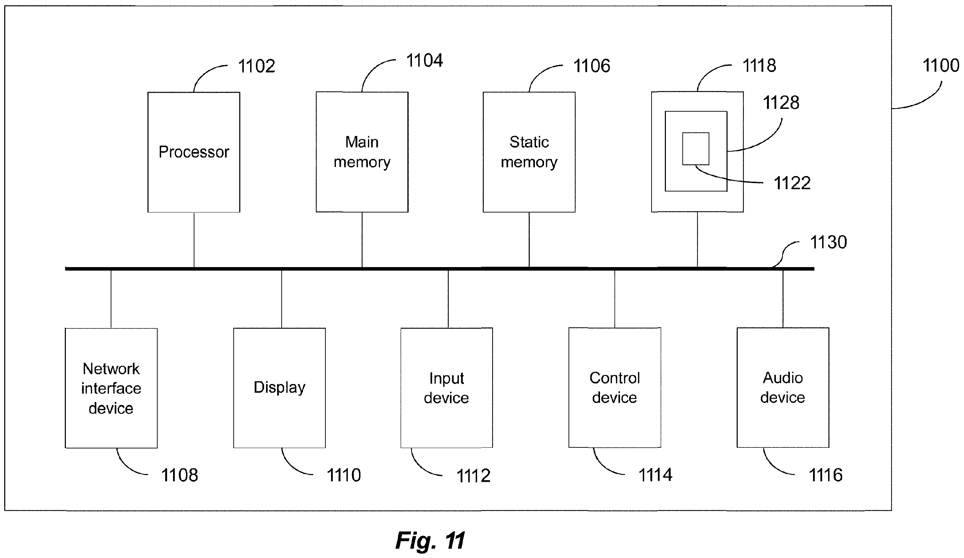

Figure 11 illustrates a block diagram of one implementation of a computing device 1100 within which a set of instructions, for causing the computing device to perform any one or more of the methodologies discussed herein, may be executed. Computing device 1100 may be an example of system 100 described with reference to Figure 1. In alternative implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term "computing device" shall also be taken to include any collection of machines (e.g., computers) that individually or jointly execute a set (or multiple sets) of instructions to perform any one or more of the methodologies discussed herein.

The example computing device 1100 includes a processing device 1102, a main memory 1104 (e.g., read-only memory (ROM), flash memory, dynamic random access memory (DRAM) such as synchronous DRAM (SDRAM) or Rambus DRAM (RDRAM), etc.), a static memory 1106 (e.g., flash memory, static random access memory (SRAM), etc.), and a secondary memory (e.g., a data storage device 1118), which communicate with each other via a bus 1130.

Processing device 1102 represents one or more general-purpose processors such as a microprocessor, central processing unit, or the like. More particularly, the processing device 1102 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 1102 may also be one or more special-purpose processing devices such as an application specific integrated circuit (ASIC), a field programmable gate array (FPGA), a digital signal processor (DSP), network processor, or the like. Processing device 1102 is configured to execute the processing logic (instructions 1122) for performing the operations and steps discussed herein.

The computing device 1100 may further include a network interface device 1108. The computing device 1100 also may include a video display unit 1110 (e.g., a liquid crystal display (LCD) or a cathode ray tube (CRT)), an alphanumeric input device 1112 (e.g., a keyboard or touchscreen), a cursor control device 1114 (e.g., a mouse or touchscreen), and an audio device 1116 (e.g., a speaker).

The data storage device 1118 may include one or more machine-readable storage media (or more specifically one or more non-transitory computer-readable storage media) 1128 on which is stored one or more sets of instructions 1122 embodying any one or more of the methodologies or functions described herein. The instructions 1122 may also reside, completely or at least partially, within the main memory 1104 and/or within the processing device 1102 during execution thereof by the computer system 1100, the main memory 1104 and the processing device 1102 also constituting computer-readable storage media.

The various methods described above may be implemented by a computer program. The computer program may include computer code arranged to instruct a computer to perform the functions of one or more of the various methods described above. The computer program and/or the code for performing such methods may be provided to an apparatus, such as a computer, on one or more computer readable media or, more generally, a computer program product. The computer readable media may be transitory or non-transitory. The one or more computer readable media could be, for example, an electronic, magnetic, optical, electromagnetic, infrared, or semiconductor system, or a propagation medium for data transmission, for example for downloading the code over the Internet. Alternatively, the one or more computer readable media could take the form of one or more physical computer readable media such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

In an implementation, the modules, components and other features described herein (for example device 100 in relation to Figure 1) can be implemented as discrete components or integrated in the functionality of hardware components such as ASICS, FPGAs, DSPs or similar devices as part of an individualization server.

A "hardware component" is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase "hardware component" should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

Unless specifically stated otherwise, as apparent from the following discussion, it is appreciated that throughout the description, discussions utilizing terms such as "displaying", "receiving", "selecting", "splitting", "combining", "performing", "transmitting", "removing", or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

**Claims**

1. A system for decoding an encoded video, comprising:

   a masking unit configured to:

   receive the encoded video,
   select at least one AU from the encoded video,
   select at least one pair of macroblocks of the at least one selected access unit (AU), and
   exchange a position of the macroblocks of the selected at least one pair of macroblocks to form a masked encoded video;

   a decoder configured to receive and decode the masked encoded video to form a masked decoded video; and
   an unmasking unit configured to receive the masked decoded video and, for a frame corresponding to the selected AU, exchange a position of pixels corresponding to the macroblocks of the selected at least one pair of macroblocks to form an unmasked decoded video.

**2.** The system of claim 1, wherein the macroblocks of the selected at least one pair of macroblocks are spatially separated.

**3.** The system of claim 1 or claim 2, wherein the masking unit is further configured to modify motion vectors between the macroblocks of the selected at least one pair of macroblocks and respective reference blocks within the encoded video.

**4.** The system of any preceding claim, wherein the masking unit is further configured to deactivate application of a deblocking filter and the unmasking unit is further configured to apply the deblocking filter after exchanging a position of the pixels corresponding to the macroblocks of the selected at least one pair of macroblocks.

**5.** The system of any preceding claim, wherein the masking unit is further configured to modify discrete cosine transform (DCT) coefficients of the macroblocks of the selected at least one pair of macroblocks.

**6.** The system of claim 1 or claim 2, wherein the macroblocks of the selected at least one pair of macroblocks are lossless intra-frame encoded.

**7.** The system of claim 1 or claim 2, wherein the macroblocks of the selected at least one pair of macroblocks are intra-frame encoded.

**8.** The system of claim 1 or claim 2, wherein the macroblocks of the selected at least one pair of macroblocks are inter-frame encoded.

**9.** A method for decoding an encoded video, comprising:

   receiving the encoded video;
   performing a masking function on the encoded video to form a masked encoded video, the masking function comprising:

      selecting at least one access unit (AU) from the encoded video,
      selecting at least one pair of macroblocks of the selected access unit (AU),
      exchanging a position of macroblocks of the selected pair of macroblocks to form a masked encoded video;

   transmitting the encoded masked video to a decoder arranged to decode the encoded masked video;
   receiving the decoded masked video from the decoder; and
   for a frame corresponding to the selected AU, exchanging a position of pixels corresponding to the macroblocks of the selected at least one pair of macroblocks to form an unmasked decoded video.

**10.** The method of claim 9, wherein the macroblocks of the selected at least one pair of macroblocks are spatially separated.

**11.** The method of claim 9 or claim 10, wherein the masking function further comprises modifying motion vectors between macroblocks of the selected at least one pair of macroblocks and respective reference blocks within the encoded video.

**12.** The method of any one of claims 9 to 11, further comprising: deactivating application of a deblocking filter before transmitting the encoded masked video; and applying the deblocking filter after exchanging a position of the pixels corresponding to the macroblocks of the selected at least one pair of macroblocks.

**Fig. 1**

**Fig. 2**

**Fig. 3**

```
┌─────────────────────────────────────────────────────────────┐
│              receiving the encoded video                     │
└─────────────────────────────────────────────────────────────┘
                                                    ╲___S400
                              │
                              ▼
┌─────────────────────────────────────────────────────────────┐
│   inserting at least one dummy access unit (AU) into the     │
│    encoded video to form a masked encoded video              │
└─────────────────────────────────────────────────────────────┘
                                                    ╲___S410
                              │
                              ▼
┌─────────────────────────────────────────────────────────────┐
│   transmitting the encoded masked video to a decoder         │
│    arranged to decode the encoded masked video               │
└─────────────────────────────────────────────────────────────┘
                                                    ╲___S420
                              │
                              ▼
┌─────────────────────────────────────────────────────────────┐
│  receiving the decoded masked video from the decoder         │
└─────────────────────────────────────────────────────────────┘
                                                    ╲___S430
                              │
                              ▼
┌─────────────────────────────────────────────────────────────┐
│  removing a frame corresponding to each of the at least      │
│   one inserted dummy AUs to form a decoded video             │
└─────────────────────────────────────────────────────────────┘
                                                    ╲___S440
```

**FIG. 4**

*Fig. 5*

receiving the encoded video

S600

Selecting at least one access unit (AU) of the encoded video

S610

Splitting the at least one selected AU into N AUs, where N>=2

S620

transmitting the encoded masked video to a decoder arranged to decode the encoded masked video

S630

receiving the decoded masked video from the decoder

S640

combining frames corresponding to each of the N AUs into a frame representative of the at least one selected AU to form a decoded video

S650

*FIG. 6*

**Fig. 7**

```
┌─────────────────────────────────────────────────────────┐
│              receiving the encoded video                 │
└─────────────────────────────────────────────────────────┘
                            │
                            ▼              ╲__S800
┌─────────────────────────────────────────────────────────┐
│        Selecting an access unit (AU) of the encoded video│
└─────────────────────────────────────────────────────────┘
                            │
                            ▼              ╲__S810
┌─────────────────────────────────────────────────────────┐
│       Selecting a pair of macroblocks of the selected AU │
└─────────────────────────────────────────────────────────┘
                            │
                            ▼              ╲__S820
┌─────────────────────────────────────────────────────────┐
│      Exchanging a position of the selected macroblocks   │
└─────────────────────────────────────────────────────────┘
                            │
                            ▼              ╲__S830
┌─────────────────────────────────────────────────────────┐
│   transmitting the encoded masked video to a decoder     │
│   arranged to decode the encoded masked video            │
└─────────────────────────────────────────────────────────┘
                            │
                            ▼              ╲__S840
┌─────────────────────────────────────────────────────────┐
│   receiving the decoded masked video from the decoder    │
└─────────────────────────────────────────────────────────┘
                            │
                            ▼              ╲__S850
┌─────────────────────────────────────────────────────────┐
│       For a frame corresponding to the selected AU,      │
│   exchanging a position of pixels corresponding to the   │
│    selected macro blocks to form a decoded video         │
└─────────────────────────────────────────────────────────┘
                                           ╲__S860
```

*FIG. 8*

**Fig. 9**

```
┌─────────────────────────────────────────────────────┐
│          receiving the encoded video                 │
└─────────────────────────────────────────────────────┘
                          │
                          ▼                    ⌐S1000
┌─────────────────────────────────────────────────────┐
│  splitting the encoded video into a first stream and a│
│                  second stream                       │
└─────────────────────────────────────────────────────┘
                          │
                          ▼                    ⌐S1010
┌─────────────────────────────────────────────────────┐
│  sending the first stream of encoded video to a first │
│                    decoder                           │
└─────────────────────────────────────────────────────┘
                          │
                          ▼                    ⌐S1020
┌─────────────────────────────────────────────────────┐
│   sending the second stream of encoded video to a     │
│                 second decoder                       │
└─────────────────────────────────────────────────────┘
                          │
                          ▼                    ⌐S1030
┌─────────────────────────────────────────────────────┐
│  receiving a first stream of decoded video from the first│
│                    decoder                           │
└─────────────────────────────────────────────────────┘
                          │
                          ▼                    ⌐S1040
┌─────────────────────────────────────────────────────┐
│  receiving a second stream of decoded video from the  │
│                 second decoder                       │
└─────────────────────────────────────────────────────┘
                          │
                          ▼                    ⌐S1050
┌─────────────────────────────────────────────────────┐
│  combining the first stream of decoded video and the  │
│  second steam of decoded video to form a decoded     │
│                     video                            │
└─────────────────────────────────────────────────────┘
                          │
                          ▼                    ⌐S1060
```

**FIG. 10**

**Fig. 11**

EP 3 468 207 A1

Europäisches
Patentamt

European
Patent Office

Office européen
des brevets

# EUROPEAN SEARCH REPORT

Application Number

EP 17 19 5253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/163520 A1 (MARTIN FRANCOIS [FR] ET AL) 11 June 2015 (2015-06-11) * paragraphs [0064] - [0067], [0091]; figures 2, 4, 9 * | 1-12 | INV. H04N21/426 G06F21/62 H04N21/4408 H04N19/88 |
| A | US 2016/337424 A1 (MANDYAM GIRIDHAR DHATI [US]) 17 November 2016 (2016-11-17) * paragraphs [0055] - [0064]; figure 1 * | 1-12 | H04N21/4627 H04N21/4405 |
| A | US 2011/085035 A1 (CHOI SUGIL [KR] ET AL) 14 April 2011 (2011-04-14) * paragraphs [0020] - [0039] * | 1-12 | |

TECHNICAL FIELDS
SEARCHED     (IPC)

H04N
G06F

The present search report has been drawn up for all claims

| Place of search | Date of completion of the search | Examiner |
|---|---|---|
| Berlin | 11 April 2018 | Materne, Alain |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 .................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 19 5253

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2018

| Patent document cited in search report | Publication date | Patent family member(s) | Publication date |
|---|---|---|---|
| US 2015163520 A1 | 11-06-2015 | CN 104717553 A<br>EP 2884748 A1<br>ES 2611160 T3<br>PL 2884748 T3<br>US 2015163520 A1 | 17-06-2015<br>17-06-2015<br>05-05-2017<br>31-05-2017<br>11-06-2015 |
| US 2016337424 A1 | 17-11-2016 | CN 107637040 A<br>EP 3295674 A1<br>US 2016337424 A1<br>WO 2016182844 A1 | 26-01-2018<br>21-03-2018<br>17-11-2016<br>17-11-2016 |
| US 2011085035 A1 | 14-04-2011 | KR 20110038839 A<br>US 2011085035 A1 | 15-04-2011<br>14-04-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150163520 A1

- US 201501635220 A1